# EUROPEAN PATENT APPLICATION

(11) **EP 4 553 697 A1**
(43) Date of publication of application: **14.05.2025**
(21) Application number: 23208579.5
(22) Date of filing: 08.11.2023
(51) Int. Cl.: G06F 40/295, G06F 40/30

(54) **COMPUTER-IMPLEMENTED METHOD FOR GENERATING DOMAIN SPECIFIC TRAINING DATA FOR A LARGE LANGUAGE MODEL**

(71) Applicant: Siemens Industry Software NV, 3001 Leuven (BE)
(72) Inventor: Berger, Daniel, 90443 Nürnberg (DE); Liu, Kai, 90562 Heroldsberg (DE)
(74) Representative: Siemens Patent Attorneys

(57) **Abstract**

The invention relates to a computer-implemented method for generating domain (DMN) specific training data (TRD) for a large language model (LLM). It is proposed, said method comprising the steps of:
providing a domain (DMN) specific ontology (OTG) relating to said domain (DMN),
providing domain (DMN) specific information (SCI) relating to said domain (DMN),
processing said domain (DMN) specific information (SCI) in a data processing-pipeline (DDL) for structuring data for training of said large language model (LLM),
wherein said domain (DMN) specific ontology (OTG) is provided as a recognition pattern (RCP) in a step of said data processing-pipeline (DPL), such that said structured training data (STD) comprises domain (DMN) specific ontology (OTG) annotations (ANT).

## Description

The present invention relates to a computer-implemented method for generating domain specific training data for a large language model. Furthermore, the invention relates a computer-implemented method for generating a text report of a user interaction with a software application running on a computer. Furthermore, the invention relates to a computer comprising a processor and a data storage wherein a software product designed and prepared to perform the method according to the invention. Furthermore, the invention relates to a machine comprising a user input interface and comprising a user interaction recording module for recording user interaction into a data file.

### FIELD OF THE INVENTION

Natural Language Processing [NLP] has made great progress in recent years in generating texts of astonishing quality, especially since the introduction of transformer architectures.

Unlike traditional recurrent neural networks [RNNs], transformers do not require sequential processing of input data, making them highly parallelizable and efficient for training with large data sets. They consist of multiple layers of neural networks for self-attention and feed-forward, which allow them to model complex relationships between words and capture far-reaching dependencies in the input text. Transformer architectures have become the backbone of many cutting-edge language models, such as OpenAI's Generative Pre-trained Transformer [GPT] models. Transformers achieve this performance through the use of self-attention mechanisms that allow the model to focus on different parts of the input sequence when making predictions. By taking care of relevant words, transformers can better understand the context and meaning of a particular piece of text.

NLP is a field of artificial intelligence that focuses on the interaction between computers and humans through natural language. NLP involves the development of algorithms and techniques that enable computers to understand, interpret, and generate human language. It includes various tasks such as text classification, sentiment analysis, machine translation, speech recognition, and question-answering systems. NLP is used in many applications, including virtual assistants, chatbots, language translation services, and information retrieval systems.

Large Language Models [LLM], on the other hand, are statistical models used in NLP to predict the probability of a sequence of words or phrases in a given context. LLMs are trained on large amounts of text data and can be used for tasks such as speech generation, machine translation, speech recognition, and more.

Such LLMs have become the state of the art in conversational AI, which can generate not only text but also executable source code [see: "Gemini", Jan 2022. [Online]. Available: https://www.persona-ai.com/gemini] .

In their most recent form, e.g. ChatGPT, these models are widely regarded as the chatbot of the future, a kind of digital omniscient companion. In the engineering world a major technical problem is understanding how to train an LLM for an industrial or technical context. The industrial application is conservative and often safety-critical requiring a higher quality. In addition, such industrial LLMs will get in touch with subject matter experts. Therefore, the result of these LLMs must meet the standards of domain experts in terms of precision and conciseness in order to be useful.

Despite their undeniable and astonishing achievement, all LLMs suffer from ambiguities in language, e.g. the word "bat" has at least two different meanings, during training and inference. If the text fragment is embedded in enough context, such ambiguities can be resolved, e.g. by using the preceding and following sentences. However, the ability to analyze context requires billions of parameters that need to be trained on a huge amount of data. In fact, the highest-performing LLMs are trained on much of the written information collected worldwide [see: "The Next Generation of Large Language Models", February 7, 2023. Available: https://www.forbes.com/sites/robtoews/2023/02/07/the-next-generation-of-large-language-models/?sh=48731db618db].

Engineering language is very precise, but fragmented and often borrows concepts and vocabulary from neighboring disciplines: e.g., a setup in system simulation software is often referred to as a "circuit". An LLM, even if trained with all the technical texts in the world, would understand and further refer to a(n) "(electrical) circuit" and therefore also use words such as voltages and currents. This problem of ambiguity is exacerbated for understanding a particular Application Programming Interface [API] and generating snippets of code in that API because naming the API functional scope is arbitrary.

One objective of the invention is to provide an LLM tailored to a specific domain.

Furthermore, another objective of the invention is to link such an LLM to the domain-specific API of engineering software.

### Background of the invention

A set of LLMs can be trained with different subsets of training data. During inference an additional machine learning (or statistical) model can be used to recognize the domain, which could then evoke a domain specific LLM. An LLM for English input/output is trained with English texts, and similarly an LLM for German input/output is trained with German texts. If ChatGPT is asked to generate code in Python, a specific python model is evoked, mutatis mutandis for Java, etc. This setup is often referred to as sparse expert model or massive sparse expert model. A sparse expert model is a type of machine learning model that is designed to handle sparsity in the input data. Sparsity refers to situations where most of the input features or dimensions have zero or very low values.

One issue is that for many specific domains, e.g. System Simulation Engineering, there is simply not enough training data in text that an LLM can be trained reliably with to meet the particularly high standards in engineering.

Another possibility may be to train an LLM with a vast amount of text from the general engineering domain, and further fine-tune the model to specific domains by adding human-in-the-loop supervised and human-in-the-loop reinforcement learning on top, similar to what is done to bring ChatGPT to its astonishing level [see:
https://en.wikipedia.org/wiki/ChatGPT*:-:text=10%20External%2 0links-,Training,to%20improve%20the%20model's%20performance [Online]].

The human in the loop, however, must have expert knowledge from the specific domain, rendering this approach unfeasible (or at least not economical) for most engineering applications. The initial investment to train the model would be huge and requires too much time to pay off for the large-scale service provider ("hyperscaler") to be interested in that domain.

Since LLMs have the capability to absorb information during an instance (e.g. a chat conversation) one could imagine that loading an instance and teaching it with lots of domain knowledge upfront is a valid option. But, that capability is pretty limited: even ChatGPT can only remember a few thousand tokens back in conversation (4 tokens ≈ 3 words), rendering it impossible to remember e.g., the manual for a complex product, like, e.g., Simcenter Amesim.

In the context of NLP, the preparation of training data may be referred to as the NLP pipeline which refers to the sequence of steps involved in processing and analyzing text data to extract meaningful information from textual input. The NLP pipeline typically may include the following steps:
- Text Preprocessing: This step involves cleaning and preparing the text data by removing unnecessary characters, punctuation, and stopwords, and converting the text to a standardized format.
- Tokenization: In this step, the text is divided into individual words or tokens to facilitate further analysis. Tokens can be sentences, words, or even subwords, depending on the specific application.
- Part-of-Speech Tagging: This step assigns grammatical tags to each word in the text, indicating their syntactic role, such as noun, verb, adjective, etc.
- Named Entity Recognition (NER): NER identifies and classifies named entities in the text, such as person names, organizations, locations, dates, etc.
- Dependency Parsing: This step analyzes the grammatical structure of the text and establishes the relationships between words, identifying the subject, object, and modifiers in the sentence.
- Sentiment Analysis: Sentiment analysis determines the sentiment or emotional tone expressed in the text, classifying it as positive, negative, or neutral.
- Text Classification: Text classification assigns predefined categories or labels to the text based on its content, such as topic classification, spam detection, or sentiment classification.
- Information Extraction: Information extraction involves extracting specific information or structured data from unstructured text, such as extracting entities, relationships, or events.
- Language Modeling: Language modeling focuses on predicting the next word or sequence of words in the text, based on the patterns and context learned from a given dataset.

The specific steps and their order may vary depending on the NLP task and the requirements of the application. The NLP pipeline provides a systematic approach to process and analyze text data, enabling the extraction of useful insights and information.

### SUMMARY OF THE INVENTION

The objective of the invention is achieved by the independent claims. The dependent claims describe advantageous developments and modifications of the invention.

More specifically the invention proposes a method of the incipiently mentioned type comprising the additional steps of:
- providing a domain specific ontology relating to said domain,
- providing domain specific information relating to said domain,
- processing said domain specific information in a data processing-pipeline for structuring data for training of said large language model,
- wherein said domain specific ontology is provided as a recognition pattern in a step of said data processing-pipeline, such that said structured training data comprises domain specific ontology annotations.

The main benefit of this training data generation lies in the improved performance of the trained LLM in particular in the field of any engineering domain of the domain specific ontology.

An ontology is a formal representation of knowledge that defines the concepts and relationships within a particular domain. It aims to capture the meaning and semantics of the entities and their relationships. An ontology typically consists of a hierarchical structure with classes, subclasses, and properties. It provides a rich, detailed representation of knowledge and can be used for reasoning and inference.

Ontology and taxonomy are both methods for organizing and categorizing information. A taxonomy is a hierarchical classification system that organizes entities into categories based on their shared characteristics. It focuses on categorization and classification rather than capturing the semantics and relationships between concepts. Taxonomies are often used for organizing and indexing information, making it easier to navigate and retrieve relevant content. They are commonly represented as trees or hierarchies, where each category represents a specific level of abstraction.

Both ontology and taxonomy play important roles in organizing information and even when used distinctly share a significant intersection with regard to application, methodology and purpose. For the sake of simplification, the term ontology herein is used to represent both ontology and taxonomy.

A beneficial embodiment of the invention provides said computer-implemented method, wherein said domain specific information comprises domain specific text documents relating to said domain,
wherein said processing-pipeline is a natural language processing pipeline for structuring data for training of said large language model,
wherein said domain specific ontology is provided as a recognition pattern in a step of named entity recognizing of said natural language processing pipeline, such that said structured training data comprises domain specific ontology annotations.

Another preferred embodiment of the invention, which is beneficial for using said LLM in connection with a software application, provides said computer-implemented method for generating software application specific training data for a large language model,
wherein said software application is related to said specific domain of a specific factual context and/or a technical and/or a physical domain,
wherein said domain specific information is provided as a software application computer program and/or a source code and/or an API definition of said software application, wherein said processing-pipeline is a code parsing pipeline for structuring data for training of said large language model,
wherein said domain specific ontology is provided as a recognition pattern in a step of semantic analyzing of said code parsing pipeline such that said structured training data comprises domain specific ontology annotations.

An essential aspect of the invention is combining large language models and semantic technologies to generate domain-specific large language models for engineering purposes.

The semantic technology can solve this problem by adding domain-specific meaning to the APIs that need be used for training of the LLM.

A simple example may illustrate this approach. "Wire" is a generic word that can have different meanings in different contexts. Considering computer aided design [CAD], like using the Siemens product NX CAD, using semantic technology, the exact meaning for "Wire" in the mechanical domain may be easily defined. Dealing with a mechanical design in CAD that contains a wire, understanding the meaning of "wire" is necessary and its relationships to other NX concepts, like Stock, Connector, Design, Part, Device. The explanation text of these concepts and their relationships are precisely defined in an NX CAD ontology. The APIs need to associate with the NX ontology as well, such that the domain-specific knowledge given in the domain specific terminology can be captured precisely.

In the following this preferable concept is explained in detail. The following steps preferably may be performed when training an LLM with a set of text documents and domain-specific ontologies:
1) A text document is pre-processed and transformed to a format that can be understood by subsequent steps, e.g. JSON.
2) The pre-processed document is fed into a tokenizer which splits the sentences into words.
3) A so-called Parts-of-Speech [POS] tagger takes the list of words and classifies them to different parts, e.g. nouns, verbs, adjectives.
4) A Named-Entity Recognition [NER] engine takes the tagged words and classifies them into pre-defined categories. The domain-specific ontology (and taxonomy are) is fed into the engine as well, in order to associate the International Resource Identifier [IRI] defined in the ontology to the words.
5) The words are postprocessed and constitute well-formed training data for an LLM.

Preferably in parallel, a similar flow may be executed in a code parsing pipeline where the following steps are performed:
1) The source code is passed to a lexer that tokenizes the code and generates a stream of tokens.
2) The parser takes the stream of tokens and turns them into an abstract syntax tree [AST], which is the representation of the source code and its meaning.
3) After the parsing, a semantic analyzer gathers semantic information from the source code, including type-checking. The domain-specific ontology is fed into the semantic analyzer, which annotates the AST with the IRIs in the ontology. These IRIs are unique in the specific domain, such that the words can be easily looked up and linked together between text documents and computer programs.

Herein, a semantic analyzer also known as a semantic parser or a semantic understanding module means a component of NLP systems that aims to understand the meaning or semantics of text or speech. It is designed to extract the underlying meaning and relationships between words, phrases, and sentences in order to enable better comprehension and interpretation.

Known semantic analyzers use various techniques and algorithms to analyze the structure, context, and semantics of language. They may employ methods such as syntactic parsing, part-of-speech tagging, named entity recognition, word sense disambiguation, and semantic role labeling. These techniques help identify the syntactic and semantic elements in a sentence or text, such as subject, object, verb, and their relationships.

The output of a semantic analyzer is typically a representation of the meaning of the input text, such as a semantic graph or a structured representation that can be further processed by downstream NLP tasks like question answering, information retrieval, or machine translation.

The output of both pipelines constitutes training data respectively, which is semantically aligned through a common ontology. This semantic alignment of both training data pipelines improves the efficiency of the training of the LLM significantly. The training may be provided as input to any state-of-the-art training pipeline to train the final domain specific LLMs. The actual specifics of the training pipeline are not subject of this invention disclosure.

The method according to the invention and its preferred embodiments may be implemented for different applications. Examples for such applications are:
- a digital assistant for simulations tasks, which has an expert understanding of e.g., how to tune simulation models for obtaining quick and reliable results,
- observing engineering work and automatically generating reports and documentations,
- automation engineering advisor, which knows how to select an optimal hardware configuration by considering both functional and non-functional requirements,
- engineering advisor for optimizing PLC programs in terms of performance and memory consumption,
- engineering advisor analyzing the hardware and software engineering artifacts and generating reports for the current engineering project.

Such implementations may result in a digital companion - respectively an LLM - for the respective engineering application.

Furthermore, in accordance with the invention there is provided a computer-system being prepared for carrying out the method.

More specific the computer-system relates to a computer or a computer-system, comprising:
- at least one processor,
- at least one memory coupled to the at least one processor, the memory storing a set of instructions to be executed by the processor, wherein said set of instructions, when executed by the processor, cause the system to perform the steps according to the invention. The computer system can be a single computer or a computer system consisting of multiple computers that are connected to each other, such as through the World Wide Web or another network configuration. Preferably, the simulation can be distributed across the computer system in such a way that the computational work is divided among several computers, processors. Such preferred implementation enables a fast and flexible engineering support which may be available on any computing platform.

Furthermore, in accordance with the invention there is provided a machine comprising a user input interface and comprising a user interaction recording module for recording user interaction into a data file,
said machine comprising a processor designed and prepared to perform the method according to the above explanations,
said machine comprising an output interface to output said user action report. The automatic reporting function may safe the effort to document the user actions and enables understanding the user interaction even for personal which is not knowledgeable about using the machine interaction reported.

A preferred embodiment of said machine comprises a user input interface according to above explanations, wherein said output interface is a human machine interface, in particular a display. Using a display is often beneficial since displays are mostly available. Alternatively, the report may be consumed by listening to an audio file which may beneficially be automatically generated from the text report.

### BRIEF DESCRIPTION OF THE DRAWINGS

Embodiments of the invention are now described, by way of example only, with reference to the accompanying drawings, of which:
- Figure 1: shows a block diagram illustrating the invention without detail;
- Figure 2: shows a block diagram illustrating two parallel pipelines for generating training data according to the invention;
- Figure 3: shows a block diagram illustrating an application example involving an engineering software;
- Figure 4: shows a block diagram illustrating an application example involving an automation environment;
- Figure 5: shows some details of introducing ontology information into training data.

The illustration in the drawings is in schematic form. It is noted that in different figures, similar or identical elements may be provided with the same reference signs.

### DESCRIPTION OF THE DRAWINGS

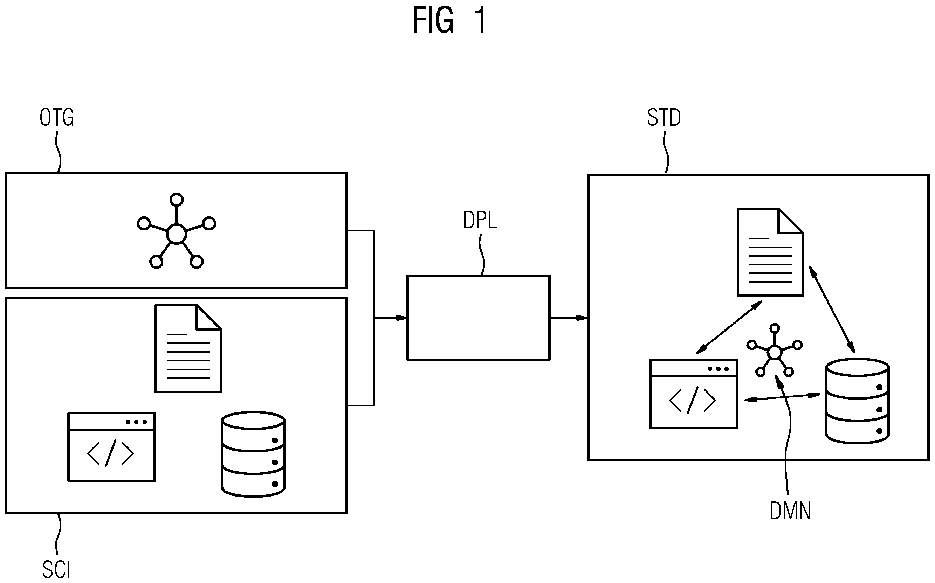

Figure 1 shows the general concept of the computer-implemented method for generating domain DMN specific training data TRD for a large language model LLM according to the invention. A domain DMN specific ontology OTG relating to said domain DMN is provided. In basically the same instance domain DMN specific information SCI relating to said domain DMN is provided. On basis of the ontology OTG said domain DMN specific information SCI is re-structured and annotated in a data processing-pipeline DPL with domain DMN specific ontology-based context and provided as semantic structured training data STD for training of a large language model LLM in said specific domain DMN.

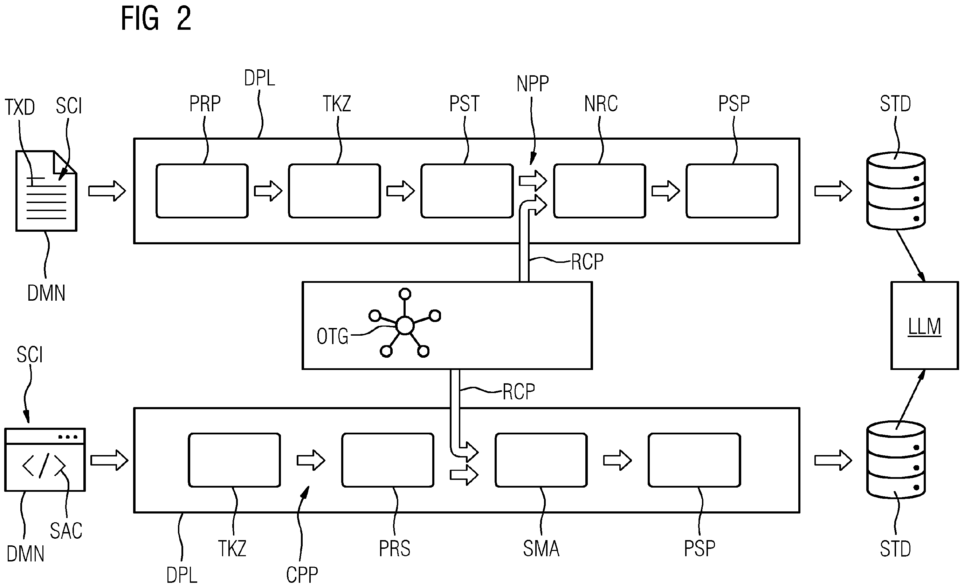

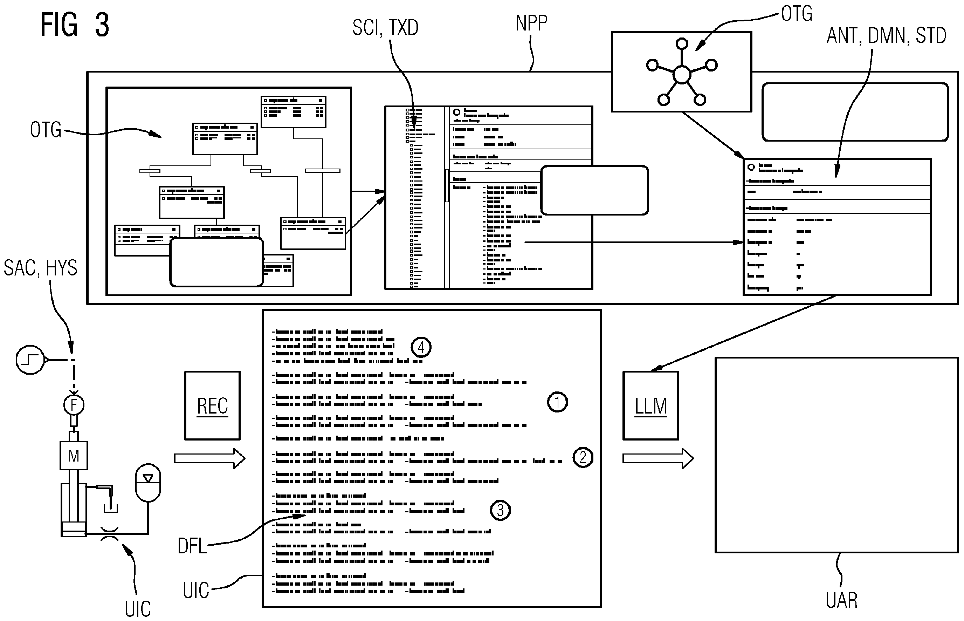

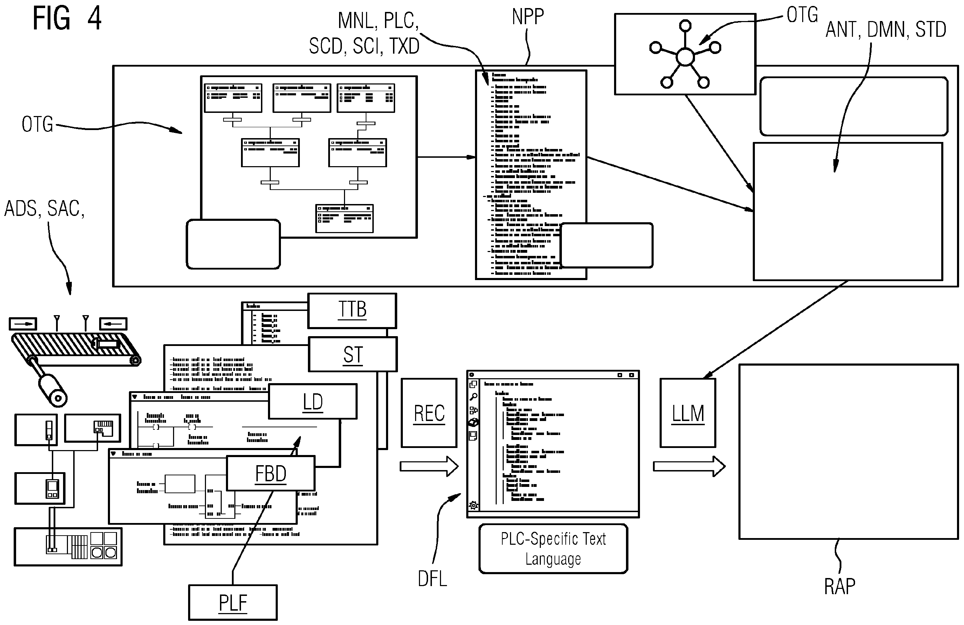

As illustrated in figure 2 in more detail said domain DMN specific information SCI is processed in a data processing-pipeline DPL for structuring data for training of said large language model LLM, such that said structured training data STD comprises domain DMN specific ontology OTG annotations ANT. Subsequently the method comprises a step of training TRN said large language model LLM using said structured training data STD comprising domain DMN specific ontology OTG annotations ANT as illustrated in the examples presented in figures 3 and 4.

Figure 2 shows how said domain DMN specific ontology OTG is provided as a recognition pattern RCP in two different data processing-pipelines DPL shown in the upper and lower part of figure 2.

In the upper part of figure 2 domain DMN specific information SCI comprises domain DMN specific text documents TXD relating to said domain DMN.

Shown processing-pipeline is a natural language processing pipeline NPP for structuring data for training of said large language model LLM. Said natural language processing pipeline NPP comprises the steps of preprocessing PRP, tokenizing TKZ, part-of-speech-tagging PST, named entity recognizing NRC and post-processing PSP.

A domain DMN specific ontology OTG is provided as a recognition pattern RCP in a step of named entity recognizing NRC of said natural language processing pipeline NPP, such that said structured training data STD comprises domain DMN specific ontology OTG annotations ANT.

In the lower part of figure 2 said domain DMN specific information SCI is provided as a software application computer program SAC and/or a source code SRC and/or an API definition APD of said software application. Said software application is related to said specific domain DMN of a specific factual context and/or a technical and/or a physical domain DMN. The processing-pipeline is a code parsing pipeline CPP for structuring data for training of said large language model LLM. The code parsing pipeline CPP comprises the steps of tokenizing TKZ, which may also be termed a lexer, parsing PRS, semantic-analyzing SMA and post-processing PSP. The domain DMN specific ontology OTG is provided as a recognition pattern RCP in a step of semantic analyzing SMA of said code parsing pipeline CPP such that said structured training data STD comprises domain DMN specific ontology OTG annotations ANT.

Figure 3 shows an application example of the method according to the invention. The software application computer program SAC is Amesim provided by Siemens which is used to develop, investigate and improve systems with a variety of multiphysics subcomponents. The software provides a holistic view of the interaction of mechanical, hydraulic, pneumatic, thermal, electrical and electronic parts. The manual and the source code of Amesim are processed according to the invention together with a domain specific ontology. A large language model LLM is trained with the structured training data STD comprising domain DMN specific ontology OTG annotations ANT.

In a second phase said trained large language model LLM is used to generate a user action report UAR. In this example a hydraulic suspension HYS design is modified by a user USR of the software application computer program SAC Amesim. The user interaction UIC is recorded REC in a data file DFL and said data file DFL is processed by said trained large language model LLM to generate a user action report UAR.

Figure 4 shows a similar example of applying the method according to the invention as figure 3 relating to an application of automation design. The software application computer program SAC is an automation design software ADS. A manual MNL and a source code SCD of the automation design software are processed as domain DMN specific information SCI according to the invention together with an automation domain specific ontology OTG which includes a taxonomy of programming language PLC instructions. A large language model LLM is trained with the structured training data STD comprising domain DMN specific ontology OTG annotations ANT.

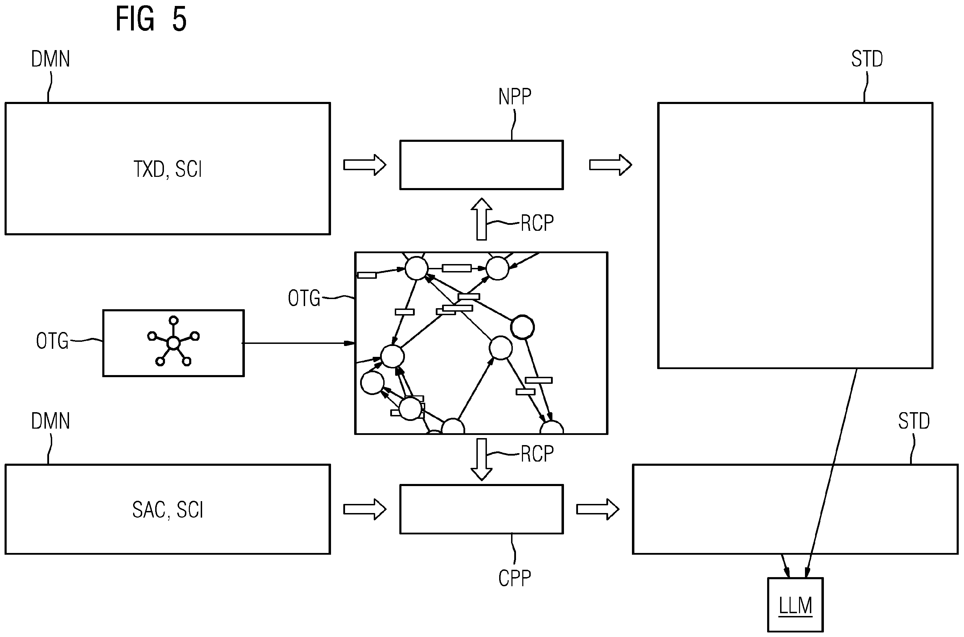

In the second phase - relating to the application of the trained large language model LLM said trained large language model LLM is used for generating a text report of an automation process of a machine. Said automation process of a machine is implemented as a programmable logic controller language file, preferably written in a programming language according to IEC 61131-3. That may be at least one of a ladder diagram LD, a function block diagram FBD, a structured text ST, an instruction list, or a sequential function chart. As a next step a data file DFL in a programmable logic controller semantics is generated from said programmable logic controller language file PLF. The data file DFL is processed by said trained large language model LLM to generate said text report of an automation process RAP. Figure 5 shows by way of example a natural language processing pipeline NPP and a code parsing pipeline CPP for structuring data for training of said large language model LLM.

This example starts from a computer software documentation or manual describing the function of an engineering application, like "Amesim Automotive Electrics library documentation". The description may contain text like:
"The automotive electrics library provides various models to model automotive on-board networks such as energy generators alternator, energy stocking systems battery, energy consumer loads, connections wires, fuses .... Three levels of detail are available quasi-static, slow transient, fast transient. From simple energetic behavior to precise high frequency dynamics modeling. Automotive electronics design can be improved with the automotive electronics library and the Simcenter Amesim environment thanks to the representation of electrical, thermal and mechanical phenomena."

A domain specific ontology is provided.

Combining the description with the ontology in the NLP-pipeline results in the documentation with ontology annotation as structured training data STD in json-format, which may be like the following:
{"id": "libae/ae", "url": "/libae/doc/ae.html", "title": "Automotive Electrics library", "text": "The Automotive Electrics library provides various models to model automotive on-board networks such as: energy generators alternator, energy stocking system battery, energy consumer loads, connection wires, fuses... Three levels of detail are available: quasi-static, slow transient, fast transient. From simple energetic behavior to precise high frequency dynamics modeling, automotive electrics designs can be improved with the Automotive Electrics library and the Simcenter Amesim environment thanks to the representation of electrical, thermal and mechanical phenomena", "tag": "http://ontology.siemens.com/disw/amesim#Library"}

In parallel a code parsing pipeline CPP processes an API definition of Amesim AMEGetLibraryIconGeometry resulting in the structured data for training of said large language model LLM:
{"Module":{"body":[{"Expr":{"value":{"Call":{"args":[{"C onstant":{"kind":null,"value":"meca.mass2port"}}],"func" :{"Name":{"ctx":"Load","id":"AMEGetLibraryIconGeometry", "tag":"http://ontology.siemens.com/disw/amesim#Library"} }, "keywords": [] }}}}], "type_ignores": [] }}

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

## Claims

1. Computer-implemented method for generating domain (DMN) specific training data (TRD) for a large language model (LLM) wherein said method comprising the steps of:
providing a domain (DMN) specific ontology (OTG) relating to said domain (DMN),
providing domain (DMN) specific information (SCI) relating to said domain (DMN),
processing said domain (DMN) specific information (SCI) in a data processing-pipeline (DPL) for structuring data for training of said large language model (LLM),
wherein said domain (DMN) specific ontology (OTG) is provided as a recognition pattern (RCP) in a step of said data processing-pipeline (DPL), such that said structured training data (STD) comprises domain (DMN) specific ontology (OTG) annotations (ANT).

2. Computer-implemented method according to claim 1, wherein said domain (DMN) specific information (SCI) comprises domain (DMN) specific text documents (TXD) relating to said domain (DMN),
wherein said processing-pipeline is a natural language processing pipeline NPP for structuring data for training of said large language model (LLM),
wherein said domain (DMN) specific ontology (OTG) is provided as a recognition pattern (RCP) in a step of named entity recognizing (NRC) of said natural language processing pipeline NPP, such that said structured training data (STD) comprises domain (DMN) specific ontology (OTG) annotations (ANT).

3. Computer-implemented method according to claim 1 for generating software application specific training data (TRD) for a large language model (LLM), wherein said software application is related to said specific domain (DMN) of a specific factual context and/or a technical and/or a physical domain (DMN),
wherein said domain (DMN) specific information (SCI) is provided as a software application computer program (SAC) and/or a source code (SRC) and/or an API definition (APD) of said software application,
wherein said processing-pipeline is a code parsing pipeline (CPP) for structuring data for training of said large language model (LLM),
wherein said domain (DMN) specific ontology (OTG) is provided as a recognition pattern (RCP) in a step of semantic analyzing (SMA) of said code parsing pipeline (CPP) such that said structured training data (STD) comprises domain (DMN) specific ontology (OTG) annotations (ANT).

4. Computer-implemented method according to claim 2, wherein said natural language processing pipeline NPP comprises the steps of:
preprocessing (PRP), tokenizing (TKZ), part-of-speech-tagging (PST), named entity recognizing (NRC) and post-processing (PSP).

5. Computer-implemented method to claim 3, wherein said code parsing pipeline (CPP) comprises the steps of:
tokenizing (TKZ), parsing (PRS), semantic-analyzing and post-processing (PSP).

6. Computer-implemented method according to one of the preceding claims, wherein the method comprising a step of training (TRN) said large language model (LLM) using said structured training data (STD) comprising domain (DMN) specific ontology (OTG) annotations (ANT).

7. A computer-implemented method for generating a text report from a data file (DFL), comprising the method steps according to claims 1-6,
which data file (DFL) contains passages that are formulated in computer semantics, so that the information is not easily human-readable,
the method comprising a step of processing said data file (DFL) by said trained large language model (LLM) and generating a human-readable text report (TXR).

8. A computer-implemented method according to claim 7 for generating a text report of a user interaction (UIC) with a software application running on a computer, the method comprising the steps of:
- recording (REC) of user interaction (UIC), wherein said data file (DFL) contains the recordings of said user interaction (UIC),
- processing said user interaction (UIC) data file (DFL) by said trained large language model (LLM) and generating a user action report (UAR).

9. A computer-implemented method according to claim 7 for generating a text report of an automation process RAP of a machine being controlled by the automation process implemented as a programmable logic controller language file, preferably written in a programming language according to IEC 61131-3,
the method comprising the steps of:
- generating a data file (DFL) in a programmable logic controller semantics from said programmable logic controller language file (PLF),
- processing said data file (DFL) by said trained large language model (LLM) and generating said text report of an automation process (RAP).

10. Computer system (CMP) comprising a processor (PRC) and a data storage wherein a software product (SWP) designed and prepared to perform the method according to at least one of the claims 1 to 9,
is stored in the data storage (STG) and executed by the processor (PRC).

11. Machine comprising a user input interface and comprising a user interaction recording module (UIR) for recording (REC) user interaction (UIC) into a data file (DFL),
said machine comprising a processor (PRC) designed and prepared to perform the method according to claim 9,
said machine comprising an output interface (OIF) to output said user action report (UAR).

12. Machine comprising a user input interface according to claim 11, wherein said output interface (OIF) is a human machine interface (HMI), in particular a display (DSP).
